# EUROPEAN PATENT SPECIFICATION

(11) **EP 4 234 958 B1**
(45) Date of publication and mention of the grant of the patent: **25.11.2026**
(21) Application number: 23159924.2
(22) Date of filing: 21.05.2020
(51) Int. Cl.: F16B 19/02, F16B 5/02

(54) **ADJUSTABLE STOPPER WITH LOCKING RING**
EINSTELLBARER STOPPER MIT SICHERUNGSRING
BOUCHON RÉGLABLE À BAGUE DE VERROUILLAGE

(30) Priority: 11.06.2019 GB 201908360
(43) Date of publication of application: 30.08.2023
(62) Document number(s) of the earlier application(s) in accordance with Art. 76 EPC: 20175908.1 / 3 751 157
(73) Proprietor: Illinois Tool Works Inc., Glenview IL 60025 (US)
(72) Inventor: CROOKS, Ben, Glenview, 60025 (US)
(74) Representative: HGF

(56) References cited:
- DE-A1- 19 960 768
- FR-A1- 2 845 442
- US-A1- 2019 119 969

## Description

This invention relates generally to spacer devices, and in particular to a self-adjusting spacer device for keeping two structural parts in a spaced relationship with each other and/or prevent damage.

### BACKGROUND

Spacer devices have common applications in the automobile sector. In particular, adjustable spacer devices are used to withstand and reduce the vibrations of parts which may be opened, such as the hood of the engine compartment or the trunk door.
US 2019/119969 A1 discloses a spacer assembly comprising: a housing that is configured to couple to a component, the housing including a central bore; and a bumper coupled to the housing, the bumper including a bumper support including a shaft that extends within the central bore, and a bumper head coupled to the bumper support.

Spacer devices have the function of supporting a movable structural part (for example the hood or trunk door of a vehicle) in a position flush with a stationary structural part (for example the body of a vehicle). The relative distance between the two structural parts may vary, for example, owing to the manufacturing and assembly tolerances. There is therefore a need to have adjustable spacer devices which allow compensation of the manufacturing and assembly tolerances between the two structural parts.

Various types of spacer devices are currently used in the automobile sector. Many such devices comprise a buffer head in the form of a shank and a socket into which the buffer head may be driven axially, commonly between discrete degrees of insertion. The device may further comprise mechanisms for locking the axial position of the buffer head in a desired position. In general, it is advantageous for the spacer device to be liquid-tight at all stages of operation, for example it is desirable to prevent ingress of fluids into the vehicle. In general, it is advantageous to impart pretension to the spacer device, for the purpose of further reducing vibrations when, for example, the trunk door of a vehicle is in a closed position, generally accomplished by a small axial displacement of the buffer head at the time of locking.

Various mechanisms are currently in use in the automobile sector to lock the axial position of the buffer head. Such mechanisms include the manual manipulation of the buffer head by an operator. When manipulating the buffer head in this manner, it is possible that an operator error may inadvertently alter the axial position of the buffer head, before it is locked in place, potentially rendering the device ineffective. In order to overcome this problem, it is known that the manual manipulation by an operator of an auxiliary component in place of the buffer head can reduce the likelihood of operator error in locking the position of the buffer head. For example, it is known that an auxiliary component that is coupled to the buffer head would reduce the likelihood of an operator error altering the axial position. However, currently available spacer devices are prone to operator error in the manipulation of the auxiliary component or are prone to lose liquid-tightness of the device. For example, if the auxiliary component is capable of moving axially then, by virtue of it being coupled with the buffer head, an operator error that inadvertently alters the axial position of the auxiliary component may also alter the axial position of the buffer head. In another example, the small axial displacement that introduces pretension of the buffer head involves the raising of the buffer head away from the socket, which may introduce a gap into which fluids may ingress.

### BRIEF SUMMARY OF THE DISCLOSURE

The invention is a self adjusting spacer device as described in claim 1.

In accordance with an aspect of the present disclosure, not belonging to the invention, a self-adjusting spacer device is provided, comprising a bushing, a pin, and a locking member. The bushing forming a cavity having a first longitudinal axis between a proximal bushing end and a distal bushing end, and further comprising at least one opening, a flange member at the proximal bushing end and at least one internal first coupling member. The pin having a second longitudinal axis between a head portion and a shank portion, where said shank portion further comprises at least two external threaded portions, each partially circumferentially extending on a surface of said shank portion, and at least one second coupling member which is adapted to operably engage with said internal first coupling member of said bushing, so as to allow translational movement but prevent rotational movement of said pin relative to said bushing. The locking member having a bore along a third longitudinal axis between a proximal surface and a distal surface, and at least two internal threaded portions, each of which is partially circumferentially extending on a surface of said bore. Furthermore, when assembled, said locking member is coaxial with said bushing and said pin and operably coupled to said bushing via a coupling mechanism configured to allow rotational movement of said locking member relative to said bushing about said third longitudinal axis between an adjustment position, where said at least two internal threaded portions of said locking member do not engage with respective said at least two internal threaded portions of said shank portion, and a locking position, where said at least two internal threaded portions of said locking member operably engage with said at least external threaded portions of said shank portion, and wherein said coupling mechanism is further configured to prevent translational movement along said third longitudinal axis of said locking member relative to said bushing.

This provides the advantage of locking the pin axially with respect to the bushing without direct manipulation of the pin itself. In addition, as the locking member is incapable of axial movement relative to the bushing, there is a reduced risk of an operator inadvertently altering the axial position of the pin as the position is locked. Furthermore, the spacer device is adapted to allow an additional skirt feature to be provided on the bushing minimising the risk of water-ingress.

The coupling mechanism may comprise at least one arcuate guide slot, provided on said flange member and coaxial with said first longitudinal axis, and at least one locking pin, provided at said distal surface of said locking member and adapted to operably engage with said at least one arcuate guide slot.

The at least two internal threaded portions and respective at least two external threaded portions may be adapted to operably engage so as to provide axial movement of said pin relative to said locking member, when said locking member is rotated between said adjustment position and said locking position.

This provides the advantage of introducing pretension to the device in order to reduce vibrations. In addition, as the locking member is required to be incapable of axial movement, it is only the pin that moves axially when locked, which serves to minimise the risk of a fluid ingress as no gap is created between the elements of the device.

In certain embodiments the axial movement of the pin provided by the operable engagement of the at least two internal threaded portions and respective at least two external threaded portions is in the range of about 1 mm to about 1.5mm.

The at least one internal first coupling member may comprise an internal guide member of the bushing, projecting along said first longitudinal axis from said distal bushing end towards said proximal bushing end. The at least one second coupling member may comprise a guide recess protruding coaxial with said second longitudinal axis from a distal shank end of said pin towards said head portion of said pin.

The guide recess may have a predetermined first cross section and the guide member may have a predetermined second cross section. The predetermined first cross section of the guide recess may be complimentary to the predetermined second cross section of the guide member.

The at least one internal first coupling member may comprise at least one rib portion of the bushing, projecting inwardly from an inner wall of said cavity. The at least one second coupling member may comprise at least one rib portion of the shank portion of the pin, projecting outwardly from said shank portion.

The locking pin of the locking member may comprise a lug projecting along said third longitudinal axis.

The lug projecting along said third longitudinal axis may have a distal end portion which comprises a clamp mechanism adapted to couplingly engage with the at least one arcuate guide slot.

The clamp mechanism of the lug may be configured to project through the arcuate guide slot so as to prevent translational movement of said locking member relative to the bushing along the third longitudinal axis.

The at least one arcuate guide slot may be configured to limit rotational movement of the locking member, relative to the bushing, to a predetermined angular displacement.

The predetermined angular displacement of the locking member, relative to the bushing, may be no more than 90 degrees.

The head portion of the pin may be comprised of elastomeric material.

The bushing may further comprise at least one fastening member and the at least one fastening member may be adapted to mountingly engage with an external wall.

The at least two external threaded portions of the shank portion of the pin may be arranged mutually opposed to each other. The at least two internal threaded portions of the locking member may be arranged mutually opposed to each other.

### BRIEF DESCRIPTION OF THE DRAWINGS

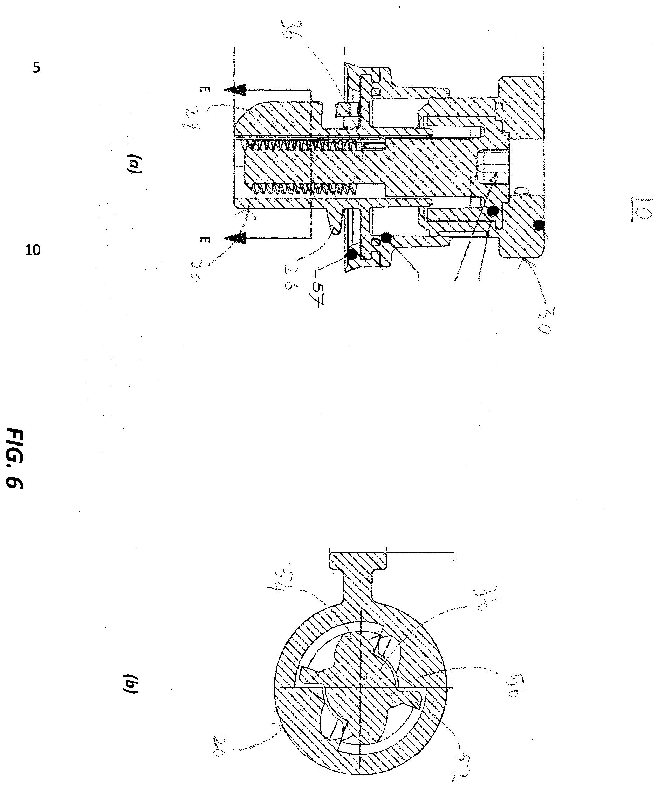

Aspects of the disclosure are further described hereinafter with reference to the accompanying drawings, only figure 6 representing the invention, in which:
Figure 1 illustrates a self-adjusting spacer device according to the present disclosure.
Figure 2 illustrates the device according to Figure 1 in (a) a minimum insertion level, (b) a maximum insertion level, and (c) a bottom view;
Figure 3 illustrates the bushing of the device according to Figure 1 in (a) a front view, (b) a side view, (c) a cross-section view along the axis B of Figure 3(a), and (d) a top view;
Figure 4 illustrates the pin of the device according to Figure 1 in (a) a front view, (b) a side view, (c) a cross-section view along the axis C of Figure 4(a), and (d) a bottom view;
Figure 5 illustrates the locking member of the device according to Figure 1 in (a) a front view, (b) a cross-section view along the axis D of Figure 5(a), and (c) a top view;
Figure 6 illustrates a variant that may be used with an example of the present invention (a) a cross-section of a front view of the variant, (b) a top view cross-section along the axis E of Figure 6(a).

### DETAILED DESCRIPTION

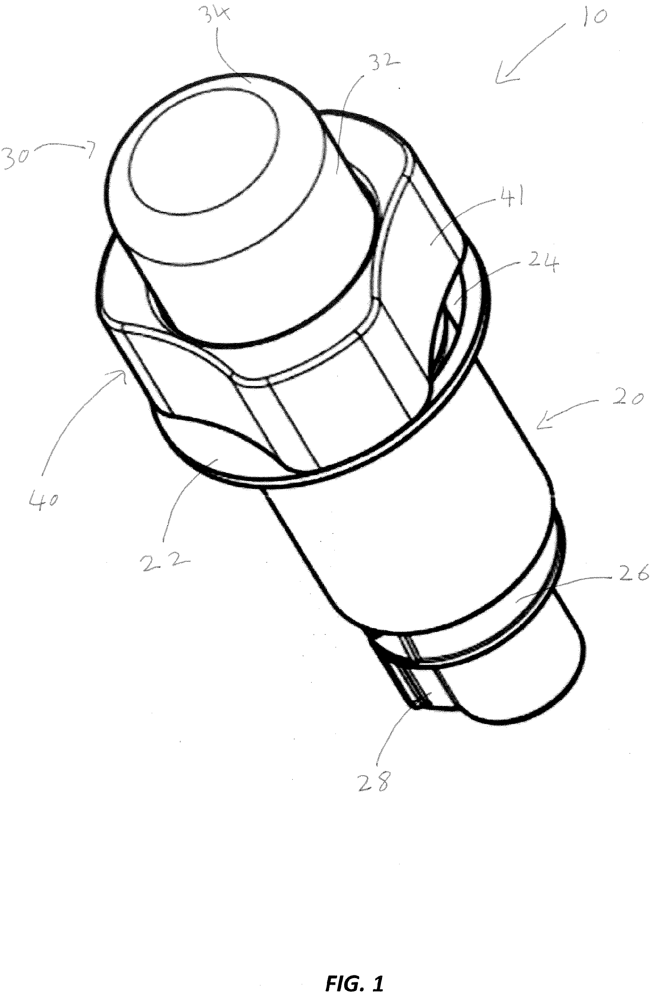

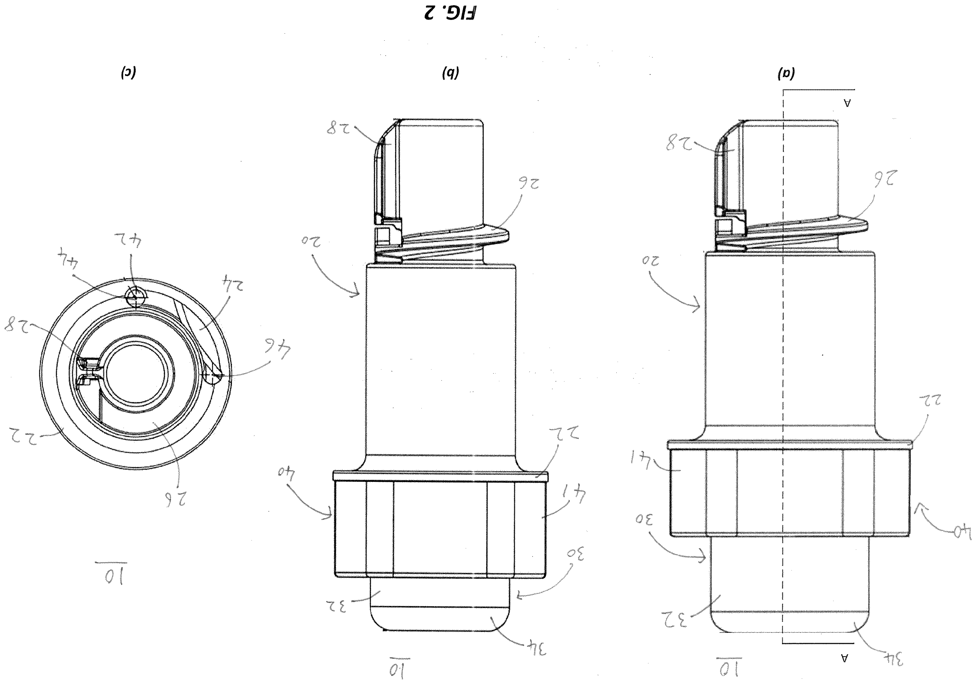

With reference to Figures 1 and 2, a self-adjusting spacer device **10** is illustrated according to an example of the present disclosure. The spacer device **10** has a longitudinal axis A and comprises a bushing **20,** a pin **30,** and a locking member **40.**

The bushing **20** comprises external fastening members **26** and **28** for engaging with an external wall (not shown) such as the body of an automobile when the bushing **20** is inserted into a suitable cavity. The external fastening members **26** and **28** are suitable for locking the bushing **20** in place during operation of the automobile or parts of the automobile such as a hood or trunk door. However, it is understood by the person skilled in the art that other types of fastening members may be used (e.g. anchor fix). The bushing **20** further comprises a flange **22.** In some examples, the flange **22** comprises an arcuate guide slot **24.** In some examples, the external fastening member **26** is a helical fixing, which locks the bushing **20** in place when rotated in a suitable cavity of an external wall.

The pin **30** is inserted axially into the bushing **20** and the locking member **40** and comprises a head **32** which projects outside of the bushing **20.** When inserted, the pin **30** is flush with the bushing **20** and locking member **40.** Optionally, a skirt member may be mounted with the bushing 20 such that the device is liquid-tight. In some examples, the head **32** of the pin **30** is provided with a cap **34** of elastomeric material, is applied onto the head **32** of the pin **30,** for example, by means of overmolding. However, it is understood by the person skilled in the art that the cap can be attached by any other suitable means.

The locking member **40** is inserted axially into the bushing **20** and comprises a gripping portion **41** which projects outside of the bushing **20** and is disposed upon the flange **22** and a locking pin **42** which projects along the axis A. The gripping portion **41** of the locking member **40** is disposed upon the flange **22.** In some examples, the gripping portion **41** of the locking member **40** is shaped to accommodate manual gripping and rotation of the locking member **40** by an operator. In some examples, the locking pin **42** comprises a lug having a clamping mechanism at its distal end. In some examples, the clamping mechanism of the lug of the locking pin **42** engages with the arcuate guide slot **24,** preventing axial movement of the locking member but allowing rotational movement. The rotational movement of the locking member may be limited by the extent of the movement of the locking pin **42** in the arcuate guide slot **24** and between an adjustment position **44** and a locking position **46.** The angular displacement separating the adjustment position **44** and locking position **46** is 90° in the example shown but may be less.

As illustrated in Figure 2, when the locking member **40** is in the adjustment position **44,** the pin **30** is capable of moving axially with respect to the bushing **20** and locking member **40.** In contrast, when the locking member **40** is in the locking position **46,** the pin **30** is incapable of moving axially with respect to the bushing **20** and locking member **40.**

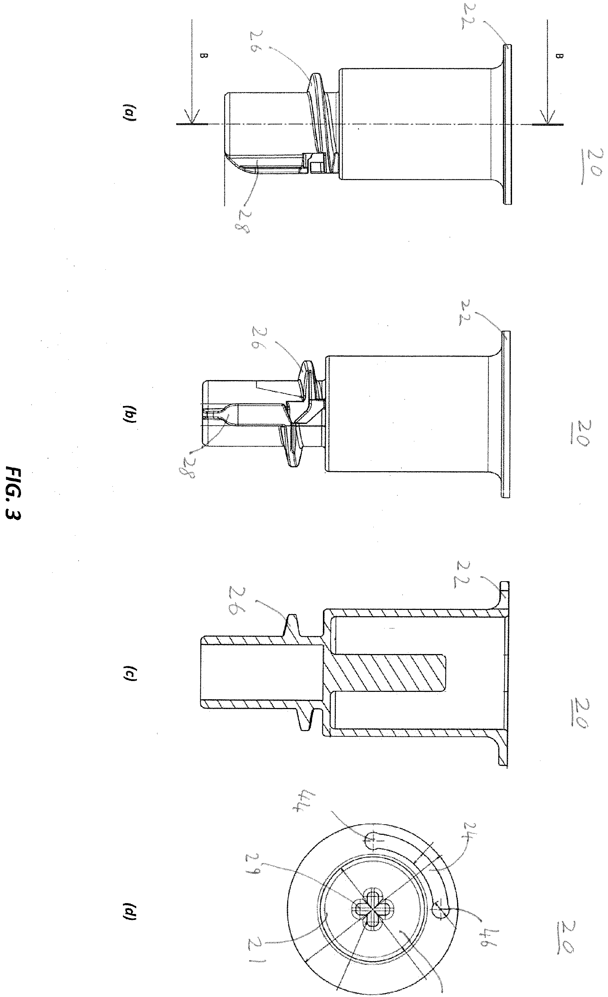

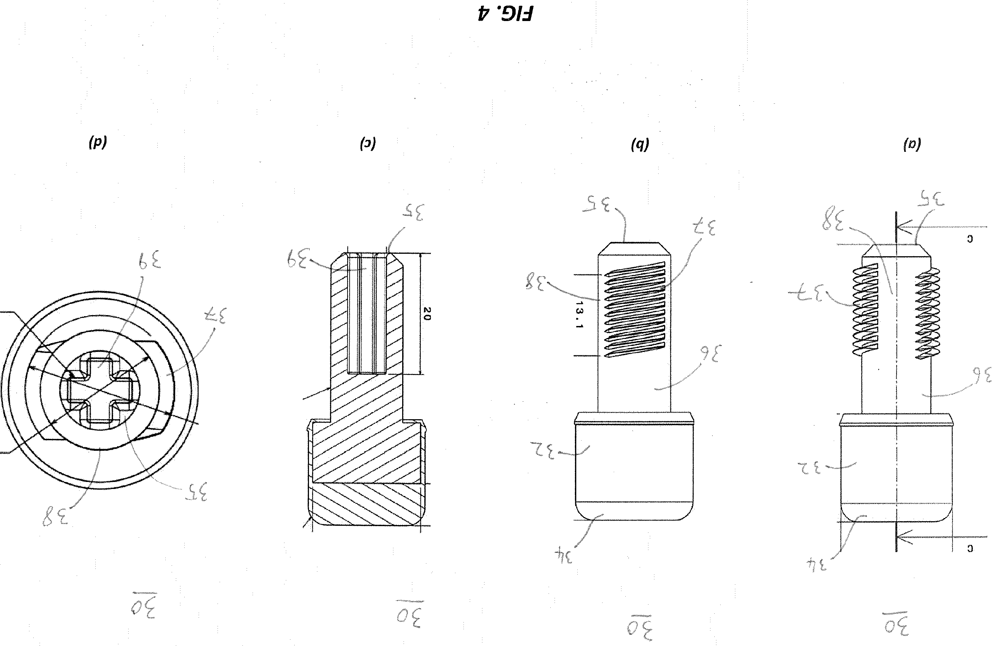

With reference to Figures 3 and 4, the bushing **20** and pin **30** further comprise coupling members **29** and **39** respectively. When the pin **30** is inserted into a cavity **21** of the bushing **20,** the coupling members **29** and **39** engage so as to prevent rotational movement of the pin **30** relative to the bushing **20.** In this particular example, the coupling member **29** takes the form of a cross-shaped protrusion extending from an internal wall **25** of the bushing **20** along the axis B and the coupling member **39** takes the form of a complimentarily cross-shaped recess extending inward along the axis C from an end portion **35** of the pin **30,** but the coupling members **29** and **39** are not limited to such. In an alternative example, one of the non-threaded engaging coupling members **29** and **39** may further comprise a serrated projection configured to engage with a threaded portion provided at the other one of the engaging coupling members 29 and 39 such that the pin **30** may be driven notch-by-notch into the bushing **20.**

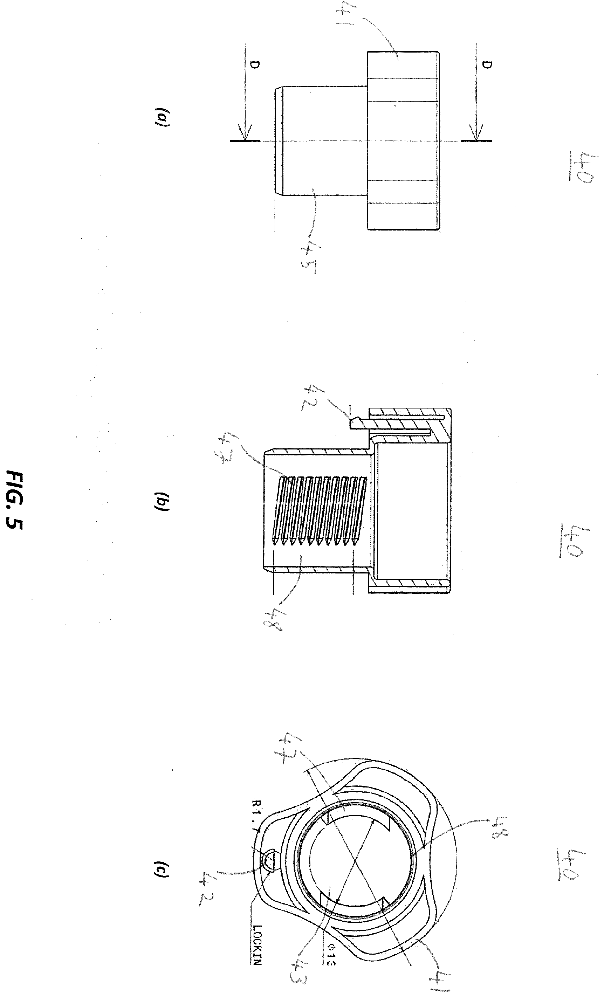

As illustrated in Figure 4 and with reference to Figure 5, the pin **30** further comprises a shank **36** which may be inserted into a bore **43** of the locking member **40** and the cavity **21** of the bushing **20** during assembly. The shank **36** comprises an external threaded portion **37** which does not extend along the entire circumference of the shank **36** and external non-threaded portions **38** which interrupt the threaded portion **37.** In this particular example, the non-threaded portions **38** are arranged mutually opposed to one another such that the external threaded portion **37** comprises two distinct portions, each extending along a part of the circumference of the shank **36,** but they are not limited to such.

The locking member **40** further comprises a coupling portion **45** through which the bore **43** extends, and which may be inserted into the cavity **21** of the bushing **20** during assembly. The coupling portion **45** comprises an internal threaded portion **47** which projects radially inward and does not extend along the entire circumference of the cavity **43,** and internal non-threaded portions **48** which interrupt the threaded portion **47.** In this particular example, the non-threaded portions **48** are arranged mutually opposed to one another such that the internal threaded portion **47** comprises two distinct portions, each extending along a part of the circumference of the cavity **43,** but they are not limited to such.

As illustrated in Figure 1 through 5, when the self-adjusting spacer device **10** is in the adjustment position **44,** the pin **30** is unable to rotate due to the coupling members **29** and **39,** and the threaded portion **37** of the pin **30** is angularly offset and disengaged from the threaded portion **47** of the locking member 40. In this position, the non-threaded portions **38** of the pin **16** are facing the non-threaded portions **48** of the locking member **40.** In this position, the pin **30** may move axially with respect to the bushing **20.** The axial movement of the pin **30** in the adjustment position **44** is restricted such that it may maintain its axial position with respect to the bushing **20** unless adequate force is applied to change its position. For example, the head **32** or shank **36** and the locking member **40** or bushing **20** may be provided with portions (which may be elastomeric) that generate a frictional force when the pin **30** is inserted into either or both of the locking member **40** and bushing **20.** In another example, the non-threaded portion **38** of the pin **30** may further comprise a serrated projection configured to engage with the threaded portion **47** of the locking member **40** such that the pin **30** may be driven notch-by-notch into the locking member **40** and bushing **20.** In another example, the non-threaded portion **48** of the locking member may further comprise a serrated projection configured to engage with the threaded portion **38** of the pin **30** such that the pin **30** may be driven notch-by-notch into the locking member **40** and bushing **20.**

The self-adjusting spacer device **10** is supplied with the locking member **40** arranged in the adjustment position **44** and with the pin **30** at minimal insertion into the cavity **21** of the bushing **20,** as in Figure 2(a). The bushing **20** is fixed to a wall (not shown), inside a circular cavity provided with coupling members which may engage the external fastening members **26** and 28. The flange **22** is pressed against the top surface of the wall and the bushing **20,** pin **30** and locking member **40** close the cavity inside which the bushing **20** is fixed.

With the locking member **40** in the adjustment position **44** and the bushing **20** fixed inside a cavity in the vehicle body, the hood or trunk door of the vehicle is brought into the closed position. The hood or trunk door of the vehicle rests on the head **32** of the pin **30** and pushes the pin **30** towards the inside of the cavity **21** of the bushing **20** and the bore **41** of the locking member **40.** The pin **20** automatically assumes the correct adjustment position. In the example shown in Figure 2(b), the pin **30** is fully inserted into the cavity **21** of the bushing **20** and the bore **41** of the locking member **40.** Then, the hood or trunk door is raised. The pin **30** remains in the set adjustment position owing to the aforementioned restriction on its axial movement. Then, the locking member **40** is rotated into the locking position **46.** During rotation of the locking member **40** between the adjustment position **44** and the locking position **46,** the threaded portion **47** of the locking member **40** engages with the threaded portion **37** of the pin 30. The rotation of the locking member **40** from the adjustment position **44** into the locking position **46,** following engagement between the threads **47** and **37,** produces an axial travel of the pin **30** which is dependent upon the pitch of the threads and the angular displacement separating the adjustment position **44** and locking position **46.** This dependency allows for the spacer device to be easily adjusted for different manufacturer specifications. In this way, when the hood or trunk door of the vehicle is closed it must compress slightly the elastomeric portion **34** of the head **32** of the pin **30,** and this produces a slight pretension effect which prevents vibrations of the hood or trunk door in the closed position. In the locking position **46** the pin **30** is locked axially owing to the engagement between the threaded portion **37** of the pin **30** and the threaded portion **47** of the locking member **40.** Furthermore, the pin **30** in the locking position **46** is also locked angularly owing to the engagement between the coupling members **29** and **39.** Alternatively, the spacer device **10** may be adjusted to provide over-slam protection so as to prevent damage to the paint. In this instance, the pin **30** is moved to a position so as to provide a "gap" condition.

The self-adjusting spacer device **10** ensures the liquid-tightness owing to the fact that the locking member **40** makes liquid-tight contact with the bushing **20** and that the pin **30** is a solid one-piece element which makes liquid-tight contact with the locking member **40** and bushing **20.** Moreover, the bushing **20** is connected to the vehicle body in a liquid-tight manner owing to an optional skirt feature **57** and the flange **22.**

The self-adjusting spacer device **10** ensures reduced risk of operator error in the axial positioning of the pin **30** owing to the fact that the pin **30** is incapable of rotating relative to the bushing **20** and that the locking member **40,** which is incapable of moving axially relative to the bushing **20,** is rotated to lock the pin **30** axially relative to the bushing **20.**

The self-adjusting spacer device according to the present disclosure may be subject to numerous constructional variants. One of these variants is shown in Figure 6. In the variant, any parts corresponding to those described above are indicated by the same reference numbers. In this second example, the pin **30** may comprise a coupling members **54** and **56** adapted to threadingly engage with each other. A coupling member **52** is provided as a locking element. When the pin **30** is inserted into the cavity **21** of the bushing **20,** the coupling members **52, 54,** and **56** engage so as to prevent rotational movement of the pin **30** relative to the bushing **20.** In the example shown, coupling members **52** and **54** take the form of rib protrusions extending outward from the shank **36** of the pin **30** and coupling member **56** takes the form of rib protrusions extending inwardly from the inner wall of the cavity **21** of the bushing **20.**

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, or characteristics described in conjunction with a particular aspect, embodiment or example of this disclosure are to be understood to be applicable to any other aspect, embodiment or example described herein unless incompatible therewith.

## Claims

1. A self-adjusting spacer device, comprising:
a bushing (20), forming a cavity (21) having a first longitudinal axis (B) between a proximal bushing end and a distal bushing end, further comprising at least one opening, a flange member (22) at said proximal bushing end, and two internal threaded portions (56), each partially circumferentially extending on a surface of said cavity (21) of said bushing (20);
a pin (30), having a second longitudinal axis (C) between a head portion (32) and a shank portion (36), said shank portion (36) further comprising two external threaded portions (54), each partially circumferentially extending on a surface of said shank portion (36);
wherein, when assembled, said pin (30) is coaxial with said bushing (20), and wherein said pin (30) is rotatable relative to said bushing (20) about said second longitudinal axis (C) between an adjustment position, where said two external threaded portions (54) of said shank portion (36) do not engage with respective said two internal threaded portions (56) of said bushing (20) and the pin (30) is capable of moving axially with respect to the bushing (20), and a locking position, where said two external threaded portions (54) of said shank portion (36) operably engage with said two internal threaded portions (56) of said bushing (20);
wherein said shank portion (36) further comprises a coupling member (52) in the form of rib protrusions extending outward from the shank portion (36) of the pin (30), and wherein, when the pin (30) is rotated within the cavity of the bushing (20), the two internal threaded portions (56), the two external threaded portions (54), and the coupling member (52) engage so as to prevent further rotational movement of the pin (30) relative to the bushing (40), wherein said bushing (20) further comprises at least one external fastening member (26, 28) adapted to mountingly engage with an external wall, **characterized in that**
the external fastening member (26) is a helical fixing, which locks the bushing (20) in place when rotated in a suitable cavity of an external wall.

2. A self-adjusting spacer device in accordance with claim 1, wherein said two internal threaded portions (56) and respective said two external threaded portions (54) are adapted to operably engage so as to provide axial movement of said pin (30) relative to said bushing (20), when said pin (30) is rotated between said adjustment position and said locking position.

3. A self-adjusting spacer device in accordance with any preceding claim, wherein said head portion (32) of said pin (30) comprises elastomeric material.

4. A self-adjusting spacer device in accordance with any preceding claim, wherein said two external threaded portions (54) are arranged mutually opposing to each other and respective said two internal threaded portions (56) are arranged mutually opposing to each other.

## Patentansprüche

1. Selbsteinstellende Abstandsvorrichtung, aufweisend:
eine Buchse (20), die einen Hohlraum (21) mit einer ersten Längsachse (B) zwischen einem proximalen Buchsenende und einem distalen Buchsenende bildet, ferner aufweisend mindestens eine Öffnung, ein Flanschelement (22) an dem genannten proximalen Buchsenende und zwei Innengewindeabschnitte (56), die sich jeweils teilweise in Umfangsrichtung auf einer Oberfläche des genannten Hohlraums (21) der genannten Buchse (20) erstrecken;
einen Stift (30) mit einer zweiten Längsachse (C) zwischen einem Kopfabschnitt (32) und einem Schaftabschnitt (36), wobei der genannte Schaftabschnitt (36) ferner zwei Außengewindeabschnitte (54) aufweist, die sich jeweils teilweise in Umfangsrichtung auf einer Oberfläche des genannten Schaftabschnitts (36) erstrecken;
wobei, wenn zusammengebaut, der genannte Stift (30) koaxial zu der genannten Buchse (20) ist, und wobei der genannte Stift (30) relativ zu der genannten Buchse (20) um die genannte zweite Längsachse (C) zwischen einer Einstellposition, in der die genannten zwei Außengewindeabschnitte (54) des genannten Schaftabschnitts (36) nicht mit den entsprechenden genannten zwei Innengewindeabschnitten (56) der genannten Buchse (20) in Eingriff stehen und der Stift (30) sich axial in Bezug auf die Buchse (20) bewegen kann, und einer Verriegelungsposition, in der die genannten zwei Außengewindeabschnitte (54) des genannten Schaftabschnitts (36) betriebsmäßig mit den genannten zwei Innengewindeabschnitten (56) der genannten Buchse (20) in Eingriff stehen;
wobei der genannte Schaftabschnitt (36) ferner ein Kopplungselement (52) in Form von Rippenvorsprüngen aufweist, die sich von dem Schaftabschnitt (36) des Stifts (30) nach außen erstrecken, und wobei, wenn der Stift (30) innerhalb des Hohlraums der Buchse (20) gedreht wird, die zwei Innengewindeabschnitte (56), die zwei Außengewindeabschnitte (54) und das Kopplungselement (52) so in Eingriff stehen, dass eine weitere Drehbewegung des Stifts (30) relativ zu der Buchse (40) verhindert wird, wobei die genannte Buchse (20) ferner mindestens ein externes Befestigungselement (26, 28) aufweist, das dazu eingerichtet ist, montierend mit einer Außenwand in Eingriff zu treten, **dadurch gekennzeichnet, dass** das externe Befestigungselement (26) eine schraubenförmige Befestigung ist, die die Buchse (20) beim Drehen in einem geeigneten Hohlraum einer Außenwand in Position verriegelt.

2. Selbsteinstellende Abstandsvorrichtung nach Anspruch 1, wobei die genannten zwei Innengewindeabschnitte (56) und die entsprechenden genannten zwei Außengewindeabschnitte (54) so eingerichtet sind, dass sie betriebsmäßig in Eingriff kommen, um eine axiale Bewegung des genannten Stifts (30) relativ zu der genannten Buchse (20) vorzusehen, wenn der genannte Stift (30) zwischen der genannten Einstellposition und der genannten Verriegelungsposition gedreht wird.

3. Selbsteinstellende Abstandsvorrichtung nach einem der vorhergehenden Ansprüche, wobei der Kopfabschnitt (32) des genannten Stifts (30) elastomeres Material aufweist.

4. Selbsteinstellende Abstandsvorrichtung nach einem der vorhergehenden Ansprüche, wobei die genannten zwei Außengewindeabschnitte (54) einander gegenüberliegend angeordnet sind und die entsprechenden genannten zwei Innengewindeabschnitte (56) einander gegenüberliegend angeordnet sind.

## Revendications

1. Dispositif d'espacement auto-ajustable, comprenant :
une douille (20), formant une cavité (21) ayant un premier axe longitudinal (B) entre une extrémité proximale de douille et une extrémité distale de douille, comprenant en outre au moins une ouverture, un élément de bride (22) au niveau de ladite extrémité proximale de douille, et deux portions filetées internes (56), chacune s'étendant partiellement circonférentiellement sur une surface de ladite cavité (21) de ladite douille (20) ;
une broche (30), ayant un deuxième axe longitudinal (C) entre une portion de tête (32) et une portion de tige (36), ladite portion de tige (36) comprenant en outre deux portions filetées externes (54), chacune s'étendant partiellement circonférentiellement sur une surface de ladite portion de tige (36) ;
dans lequel, une fois assemblée, ladite broche (30) est coaxiale à ladite douille (20), et dans lequel ladite broche (30) est rotative par rapport à ladite douille (20) autour dudit deuxième axe longitudinal (C) entre une position d'ajustage, dans laquelle lesdites deux portions filetées externes (54) de ladite portion de tige (36) ne viennent pas en prise avec lesdites deux portions filetées internes (56) respectives de ladite douille (20) et la broche (30) est capable de se déplacer axialement par rapport à la douille (20), et une position de verrouillage, dans laquelle lesdites deux portions filetées externes (54) de ladite portion de tige (36) viennent en prise de manière fonctionnelle avec lesdites deux portions filetées internes (56) de ladite douille (20) ; dans lequel ladite portion de tige (36) comprend en outre un élément de couplage (52) sous la forme de saillies de nervures s'étendant vers l'extérieur depuis la portion de tige (36) de la broche (30), et dans lequel, lorsque la broche (30) est tournée au sein de la cavité de la douille (20), les deux portions filetées internes (56), les deux portions filetées externes (54) et l'élément de couplage (52) viennent en prise de manière à empêcher un mouvement de rotation supplémentaire de la broche (30) par rapport à la douille (40), dans lequel ladite douille (20) comprend en outre au moins un élément de fixation externe (26, 28) apte à venir en prise par montage avec une paroi externe, **caractérisé en ce que** l'élément de fixation externe (26) est une fixation hélicoïdale, qui verrouille la douille (20) en place lorsqu'elle est tournée dans une cavité appropriée d'une paroi externe.

2. Dispositif d'espacement auto-ajustable selon la revendication 1, dans lequel lesdites deux portions filetées internes (56) et lesdites deux portions filetées externes (54) respectives sont adaptées à venir en prise de manière fonctionnelle de sorte à fournir un mouvement axial de ladite broche (30) par rapport à ladite douille (20), lorsque ladite broche (30) est tournée entre ladite position d'ajustage et ladite position de verrouillage.

3. Dispositif d'espacement auto-ajustable selon une quelconque revendication précédente, dans lequel ladite portion de tête (32) de ladite broche (30) comprend un matériau élastomère.

4. Dispositif d'espacement auto-ajustable selon une quelconque revendication précédente, dans lequel lesdites deux portions filetées externes (54) sont agencées de manière mutuellement opposée l'une par rapport à l'autre et lesdites deux portions filetées internes (56) respectives sont agencées de manière mutuellement opposée l'une par rapport à l'autre.
